Europäisches Patentamt

European Patent Office

Office européen des brevets

(11) Veröffentlichungsnummer: **0 180 747**
A2

## (12) EUROPÄISCHE PATENTANMELDUNG

(21) Anmeldenummer: 85111977.6

(22) Anmeldetag: 21.09.85

(51) Int. Cl.⁴: **B 23 F 5/00**

(30) Priorität: 03.11.84 CH 5250/84

(43) Veröffentlichungstag der Anmeldung:
14.05.86 Patentblatt 86/20

(84) Benannte Vertragsstaaten:
AT DE FR GB IT

(71) Anmelder: Maag-Zahnräder und -Maschinen
Aktiengesellschaft
Hardstrasse 219
CH-8023 Zürich(CH)

(72) Erfinder: Sommer, Gerd Robert
Hätschenstrasse 19
CH-8953 Dietikon(CH)

(74) Vertreter: Travnicek, Richard
c/o MAAG-Zahnräder & -Maschinen Aktiengesellschaft
Hardstrasse 219 Postfach
CH-8023 Zürich(CH)

(54) Verfahren und Vorrichtung zur Herstellung evolventenförmiger Zahnflanken.

(57) Es wird ein Verfahren beschrieben, bei welchem nur ein Arbeitspunkt oder Wirkpunkt auf dem Werkzeug, welches im allgemeinen eine Schleifscheibe sein kann, mit dem Werkstück während des Bearbeitungsvorganges in Berührung steht. Dieser eine Arbeitspunkt ist zudem innerhalb des Arbeitsbereiches auf der Schleifscheibe veränderlich wählbar und kann vorbestimmt in eine Zone mit einem festen oder variablen Radius der Schleifscheibe gelegt werden. Dies erfolgt durch wenigstens eine zusätzlich zu den an sich bekannten Vorschubbewegungen bei den im wesentlichen nach dem Teilwälzverfahren arbeitenden Bearbeitungsverfahren vorgenommene Vorschubbewegung im allgemeinen der Schleifscheibe. D.h. der Berührungspunkt zwischen Schleifscheibe und Werkstück wandert nicht auf der Schleifscheibe entsprechend den Wälzvorschubbewegungen, sondern kann in einem vorbestimmbaren Bereich gehalten werden. Darüberhinaus ist es jedoch möglich, um eine optimale Werkzeugbenützung zu erreichen diesen Arbeitspunkt gezielt und vorprogrammiert, also gesteuert zu verlagern. Dieser Arbeitspunkt kann gemäss dem Verfahren entlang verschiedenen Arbeitslinien, beispielsweise wenigstens annähernd von Erzeugenden oder wenigstens annähernd von Flankenlinien, die Schraubenlinien sein können, geführt werden. Vorrichtungen für dieses Verfahren werden angegeben.

Fig. 7

- B 1 -

0180747

## VERFAHREN UND VORRICHTUNG ZUR HERSTELLUNG
## EVOLVENTENFOERMIGER ZAHNFLANKEN

Die Erfindung bezieht sich auf ein Verfahren zur Herstellung evolventenförmiger Zahnflanken ohne oder mit geometrisch möglichen Korrekturen mit wenigstens einem Werkzeug wobei zwischen diesem und dem Werkstück Schnitt-, Vorschub- und Zustellbewegungen ausgeführt werden.

Ausserdem bezieht sich die Erfindung auf eine Bearbeitungsmaschine mit einem Maschinenrahmen, einer auf diesem verschiebbar sitzenden Wälzschlittenanordnung mit einem Werkstückträger und Spannmitteln zur Halterung des Werkstückes und gegenüber diesem einer Mehrfachschlittenanordnung zur Ausführung der Schnitt-, Zustell- und Vorschubbewegungen, mit wenigstens einem Werkzeug und Antriebsmitteln sowie Steuereinrichtungen für die Ausführung dieser Bewegungen.

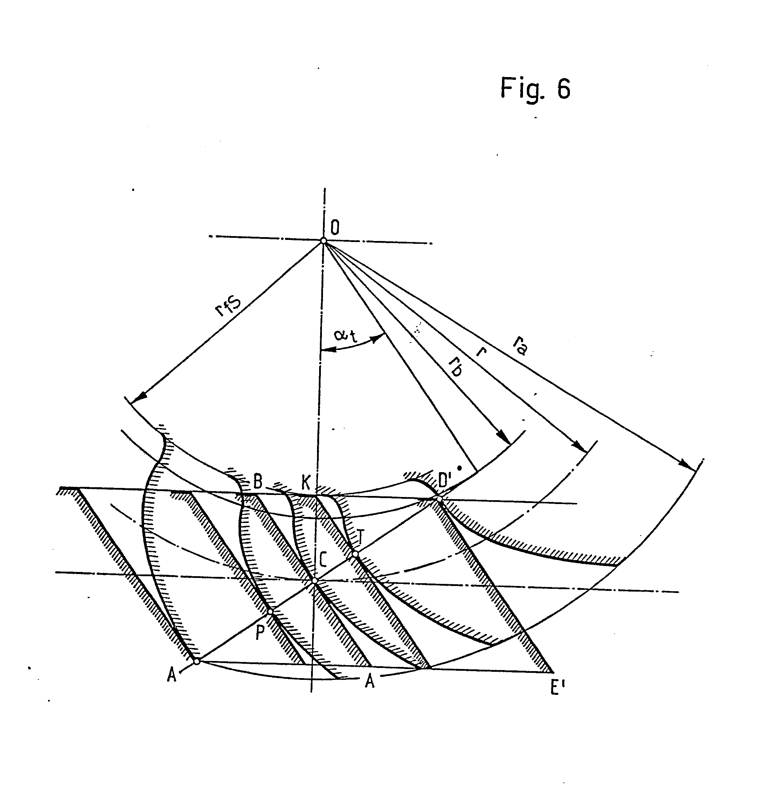

Bei einem bekannten Verfahren zur Herstellung evolventenförmiger Zahnflanken werden als Werkzeuge Kegel oder Tellerschleifscheiben verwendet, welche je eine rechte bzw. eine linke Zahnflanke bearbeiten. Dabei sind die beiden Schleifscheiben zueinander unter einem Winkel angestellt, sodass die Arbeitsebenen der Schleifscheiben die Flanken der Erzeugungszahnstange bilden, an welchem das zu schleifende Zahnrad abwälzt. Die Neigung der Schleifscheiben gegenüber der Normalen auf die Wälzebene ist im allgemeinen gleich dem Eingriffswinkel $\alpha$ der Verzahung. Dabei wird die Relativbewegung zwischen Werkzeug und Werkstück zur Erzeugung der Evolventenform, die sogenannte Wälzbewegung, vom Wälzkreis abgeleitet. Fig. 6 zeigt den Abwälzvorgang eines Zahnrades an einer Zahnstange im Stirnschnitt in mehreren Phasen. Die Punkte A, P, C, T, E begrenzen auf der Eingriffslinie Abschnitte, welchen Abschnitte auf der Zahnflanke entsprechen. Beim Durchlauf durch den Abschnitt AC auf der Eingriffslinie während des Schleifvorganges entsteht an der Zahnflanke der Kopfabschnitt. Wird der Abschnitt CT der Eingriffslinie durchlaufen, dann entsteht entsprechend auf der Zahnflanke der erste Fussteil der Zahnflankenevolvente.

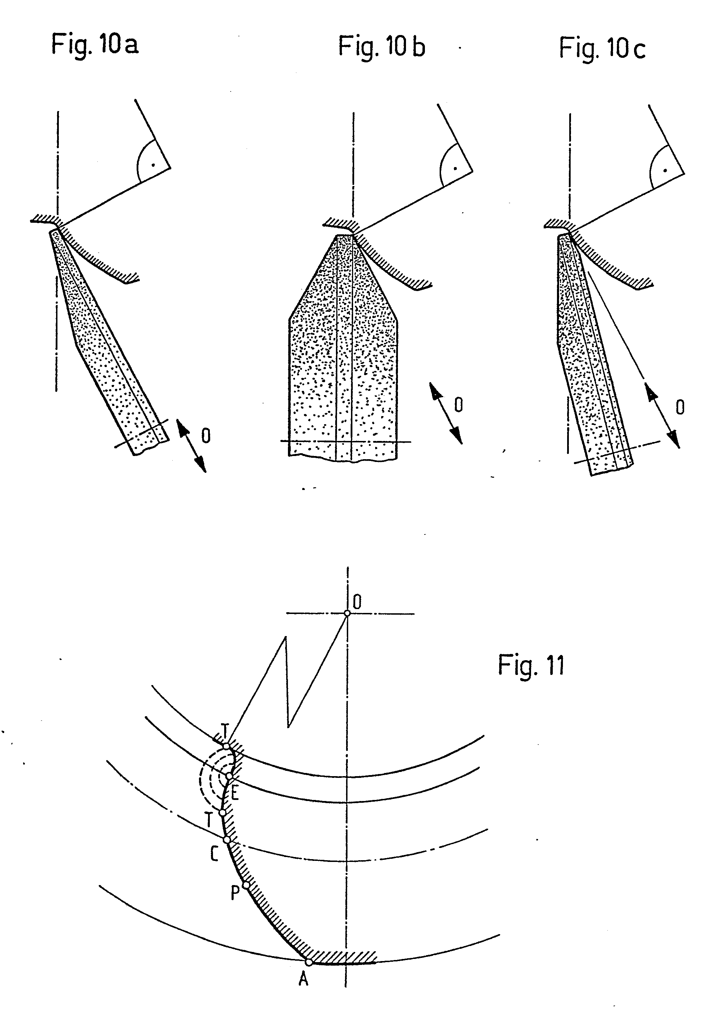

Der Punkt T auf der Eingriffslinie ist erreicht, wenn der Eckpunkt K des Zahnstangenbezugsprofils auf der Verbindungslinie OC des Werkstückzentrums (Zahnradzentrums) O mit dem Punkt C auf der Eingriffslinie liegt. Dem Abschnitt TE auf der Eingriffslinie entsprechen auf dem Zahn zwei Abschnitte, welche zugleich hergestellt werden (Fig. 11): der zweite Fussteil der Zahnflankenevolvente und die trochoidale Fussanschlussrundung. Der Punkt E ist der unterste Punkt der Evolvente und zugleich der Anfangspunkt der Fussanschlusstrochoide. Die in Fig. 11 eingetragenen Bogen deuten an, welche Punkte des zweiten Fussteils der Zahnevolvente und der Fussanschlusstrochoide gleichzeitig erzeugt werden.

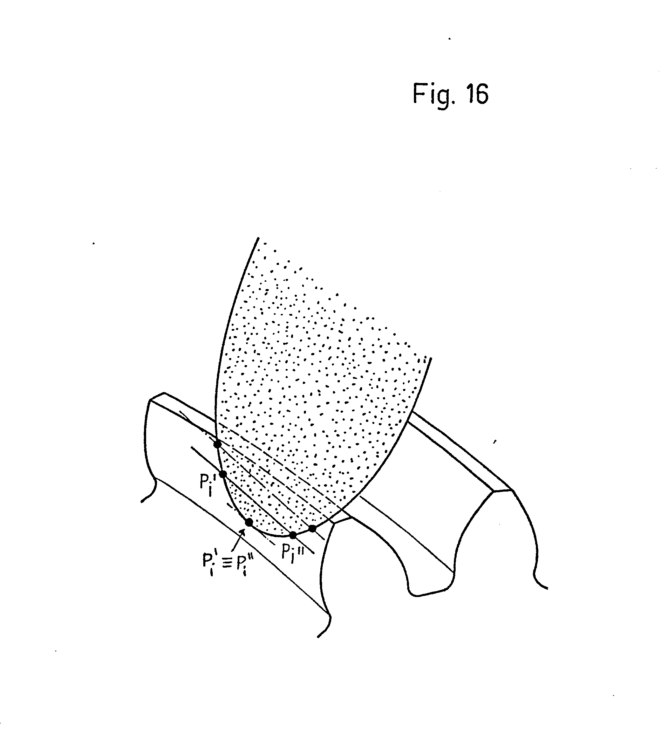

Fig. 16 zeigt die Arbeitspunkte Pi', Pi" auf einer Tellerschleifscheibe, welche in Berührung mit der Zahnflanke des Werkstückes ist. Diese Arbeitspunkte wandern, je nach Wälzstellung i, während des Schleifvorganges über die Schleifscheibe und deren Ränder entlang und liegen je auf einer Erzeugenden der Zahnflankenfläche.

Bei einer kegelförmigen Schleifscheibe wandert während des Abwälzvorganges ein Arbeitspunkt über die der gesamten Zahnflanke entsprechnede Arbeitsbreite der Schleifscheibe entlang einem Meridian. Beispielsweise sind Maschinen für solche Verfahren in den Patentschriften CH 529 604 und DE 20 50 946 beschrieben. Nachteilig bei diesem Verfahren ist, dass topologische Flankenkorrekturen nur in relativ beschränktem Umfang ausgeführt werden können, da wegen der auftretenden Kräfte zwischen Werkstück und Werkzeug und anderer Systembedingungen relativ zur Zahngrösse im allgemeinen ein grosser Bereich der Schleifscheibe am formgebenden Zerspanungsprozess beteiligt ist. Insbesondere sind die Arbeitsbereiche nur sehr grob lokalisierbar und nur durch schwer oder nicht durchführbare Aenderungen von Systemteilen, wie Schleifscheibengrössen oder -formen, beeinflussbar.

Aufgabe der Erfindung ist es, Verfahren zur Herstellung evolventenförmiger Zahnflanken anzugeben, bei welchen die Nachteile von solchen bekannten Verfahren vermieden werden und die Arbeitsbereiche der Schleifscheiben einerseits klein gehalten werden können und andererseits die Arbeitspunkte auf ihnen in ihrer Positionierung vorbestimmbar sind, um genauere Zahnflankenformen und genauere und gezieltere topografische Korrekturen zu erreichen. Eine weitere Aufgabe der Erfindung ist die Schaffung von Bearbeitungsmaschinen für die Durchführung dieser Verfahren.

Diese Aufgaben lassen sich erfindungsgemäss lösen durch ein Verfahren mit den Merkmalen des kennzeichnenden Teiles von Patentanspruch 1, wobei eine Vorrichtung zur Durchführung dieses Verfahrens die Merkmale des kennzeichnenden Teils von Patentanpruch 26 aufweist.

Ein vorteilhafter Verfahrensschritt besteht darin, dass der veränderlich wählbare Arbeitspunkt des Werkzeuges oder dessen nähere Umgebung während des Bearbeitungsvorganges durch eine zusätzliche Vorschubbewegung (O) des Werkzeuges in einem vorgebbaren vom Wälzverfahren unabhängigen Arbeitsbereich desselben gehalten wird.

Ein anderer vorteilhafter Verfahrensschritt besteht darin, dass der wählbare Arbeitspunkt des Werkzeuges oder dessen nähere Umgebung während des Bearbeitungsvorganges durch eine zusätzliche Vorschubbewegung (O1) des Werkzeuges und durch eine zusätzliche Vorschubbewegung (O2) des Werkstückes auf das Werkzeug zu in einem vorgebbaren, vom Wälzverfahren unabhängigen Arbeitsbereich desselben gehalten wird.

Ausserdem kann die zusätzliche Vorschubbewegung (O1) des
Werkzeuges entlang der Symmetriefläche der Zahnlücke vorgenommen werden.

Auch kann dabei die zusätzliche Vorschubbewegung (O2) des
Werkstückes auf das Werkzeug zu als eine translatorische,
rotatorische oder reine Wälzvorschubbewegung vorgenommen
wird.

Nach einem weiteren vorteilhaften Verfahrensschritt wird der
wählbare Arbeitspunkt des Werkzeuges oder dessen nähere
Umgebung während des Bearbeitungsvorganges durch eine dem
Werkzeugverschleiss angepasste, steuerbare Arbeitspunktbewegung kontinuierlich im Arbeitsbereich vorbestimmbar verlagert.

Insbesondere können die zusätzlichen Vorschubbewegungen mit
den anderen Vorschubbewegungen zur Erzeugung evolventenförmiger Zahnflanken nach ihrem Erzeugendenhüllschnitten, welche entlang der Arbeitslinie ausgeführt werden, verkoppelt
sein.

Dabei kann die vorbestimmbare Arbeitslinie aus Abschnitten
zusammengefügt werden, welche wenigstens annähernd Erzeugende der Zahnflankenfläche sind.

Es kann aber auch die vorbestimmbare Arbeitslinie aus Abschnitten zusammengefügt werden, bei welchen ein erster Ast
wenigstens annähernd eine Erzeugende und ein zweiter Ast wenigstens annähernd eine einer Profillinie entsprechende
Linie ist.

Es ist aber auch möglich, die zusätzlichen Vorschubbewegungen mit den anderen Vorschubbewegungen zur Herstellung evolventenförmiger Zahnflanken nach ihren Flankenhüllschnitten,
welche entlang der Arbeitslinie ausgeführt werden, zu verkoppeln.

Dann kann die vorbestimmbare Arbeitslinie aus Abschnitten zusammengefügt werden, welche wenigstens annähernd Flankenlinien der Zahnflankenfläche sind.

Oder es kann die vorbestimmbare Arbeitslinie aus Abschnitten zusammengefügt werden, bei welchen ein erster Ast wenigstens eine Flankenlinie und ein zweiter Ast wenigstens annähernd eine einer Profillinie entsprechende Linie ist.

Die zusätzliche Vorschubbewegung kann tangential zur Zahnflanke, oder tangential an einen Zahnflankenmeridian vorgenommen werden.

Es ist ferner möglich, dass die Steuerung der Arbeitspunktbewegung relativ zur Werkzeugfläche in Abhängigkeit von Verschleissmessungen an dieser Werkzeugfläche vorgenommen wird.

Auch kann die Steuerung der Arbeitspunktbewegung zur Erzielung einer besseren Werkzeugnutzung in Abhängigkeit von Verschleissmessungen und von Erfahrungswerten vorgenommen werden.

Weiter ist es vorteilhaft, wenn die Arbeitspunktbewegung der zusätzlichen Vorschubbewegung kontinuierlich oder diskontinuierlich überlagert wird.

Bei diesen Verfahren kann die Zustellbewegung zur Erzeugung unkorrigierter Zahnflanken wenigstens einstufig ausgeführt werden.

Bei der Erzeugung topografisch korrigierter Zahnflanken kann die Zustellbewegung auf der wahlweise bestimmbaren Arbeitslinie wenigstens einstufig ausgeführt werden, wobei die Zustellbewegungen der höheren Stufen entsprechend den Kor- rekturwerten jedes Korrekturpunktes kontinuierlich ausge- führt werden.

Die Zustellbewegungen können vom Werkzeug oder vom Werkstück, und hier wieder nur rein translatorisch, rein rotatorisch oder in Kombination beider ausgeführt werden.

Insbesondere können alle Bewegungen nach vorherbestimmbaren Wertemengen oder Funktionen von Wertemengen gesteuert werden.

Es ist aber auch möglich, dass alle Bewegungen, ausser an sich bekannte Abwälzvorschubbewegungen, nach vorherbestimmbaren Wertemengen oder vorherbestimmbaren Funktionen von Wertemengen gesteuert werden.

Auch kann die zusätzliche Vorschubbewegung so gesteuert werden, dass bei variablen und laufend gemessenen Werten für den Wälzweg des Werkstückzentrums und dem Schleifscheibenlängsvorschub relativ zu einem Bezugspunkt auf der Erzeugungs-Zahnstangenflanke die Gleichung

$$ys = h.tg\,\gamma + (w.\sin\alpha\,t)/\cos\gamma$$

für den Abstand des Arbeitspunktes zwischen Werkzeug und Werkstück vom Bezugspunkt beispielsweise auf der Erzeugungs-Zahnstange wenigstens annähernd erfüllt ist.

Bei der Vorrichtung zur Durchführung des Verfahrens können die Führungsmittel wenigstens ein Schlitten sein, welcher wenigstens einen zusätzlichen Verstellfreiheitsgrad für die Bewegung der Werkzeuge ergibt.

Es kann auch vorgesehen sein, dass als Führungsmittel ein Schlitten pro Werkzeug vorgesehen ist, sodass dieses mit seinem Arbeitspunkt tangential an die Zahnflanke und zusätzlich zu allen anderen Bewegungen verschiebbar ist.

Auch kann als Führungsmittel wenigstens ein Schlitten für eine zur Werkstückachse radiale Vorschubbewegung der Werkzeuge eingerichtet sein. Es ist aber auch möglich, dass ein Schlitten für eine zur Zahnflanke tangentiale Vorschubbewegung eingerichtet ist.

Ausserdem können die Steuermittel zur Steuerung der Wälzvorschubbewegung an sich bekannte mechanische Steuermittel und die Steuermittel zur Steuerung aller anderen Bewegungen oder an sich für alle Bewegungen elektronische Schaltungsmittel sein.

Insbesondere ist vorteilhaft, wenn die elektronischen Schaltungsmittel einen Hauptrechner aufweisen, der mit einer Hauptsteuereinrichtung zum Signalaustausch eine Schleifscheibensteuereinrichtung zur geregelten Steuerung wenigstens eines Schleifscheibenantriebes, eine Eingriffswinkel-, Zahnschrägewinkel- und Zwischenschlittensteuerung zur Steuerung jedes Antriebes für die Eingriffswinkeleinstellung, die Einstellung des Zahnschrägewinkels und wenigstens eines Zwischenschlittens, eine Steuereinrichtung zur Steuerung wenigstens eines Antriebes für wenigstens eine zusätzliche Vorschubbewegung jedes Werkzeuges, beispielsweise mit einem Schlitten oder als Resultierende mehrerer Vorschubbewegungen, eine Steuereinrichtung für die Steuerung wenigstens eines Antriebes für normale und/oder topografische Korrekturzustellbewegungen und eine Steuereinrichtung für den Betrieb einer Schleifscheibenmesseinrichtung angeschlossen ist, wobei die Letzte an die Steuereinrichtung für die Steuerung der anderen Bewegungen angeschlossen ist.

Das Werkzeug kann eine an sich bekannte Tellerscheibe, eine an sich bekannte Kegelscheibe oder eine Tellerschleifscheibe sein. deren Arbeitsfläche eine Kegelstumpffläche mit einem Kegelwinkel von etwas weniger als 180° ist.

Ein wesentlicher Vorteil dieses Verfahrens ist, dass auch im Verhältnis zu den topografischen Korrekturverhältnissen grössere und somit stabilere Schleifscheiben oder auch andersgeartete, beispielsweise fräserartige, Werkzeuge verwendbar sind. Dies bringt weitere verarbeitungstechnische und/oder wirtschaftliche Vorteile. Insbesondere braucht nur eine im Vergleich zu bekannten Verfahren kleinere Zone an der Schleifscheibe zur Verschleisskontrolle und -messung abgetastet werden. Dabei bringt die steuerbare Verlegung der Schleifzone u.a. den weiteren Vorteil einer verbesserten Selbstschärfung und somit einen wesentlich besseren Nutzungsgrad der Schleifscheibe. Auch kann damit die Fussabschlussrundung wesentlich besser und beeinflussbar ausgestaltet und bearbeitet werden.

Durch die verbesserte Kontrollmöglichkeit des Arbeitsbereiches der Schleifscheibe zufolge dessen Verkleinerung und steuerbare Verlegung des Arbeitspunktes wird auch die Nachstellmöglichkeit der Schleifscheibe verbessert. Auch die topografischen Korrekturen können durch einen steuerbaren und praktisch definierbaren Arbeitspunkt wesentlich exakter und besser verteilbar vorgenommen werden. Ihre End- sowie Steuerwerte sind besser beherrschbar und erreichbar bzw. überhaupt erst möglich. Damit können schwierige Laufverhältnisse von Zahnrädern wesentlich gezielter und somit besser beherrscht und korrigiert werden. Die Herrstellgenauigkeit ist besser und besser spezifischen Verhältnissen anpassbar. Somit ergibt sich eine bedeutende Qualitätsverbesserung der fertigen Zahnräder.

Weitere Vorteile und Merkmale des erfindungsgemässen Verfahrens und der Vorrichtungen zu seiner Durchführung ergeben sich aus der Beschreibung von Verfahrens-beispielen und der geometrischen Verhältnisse zwischen Werkzeug und Werkstück, sowie von beispielsweisen Varianten für Bearbeitungsmaschinen anhand der Zeichnung.

In dieser zeigt

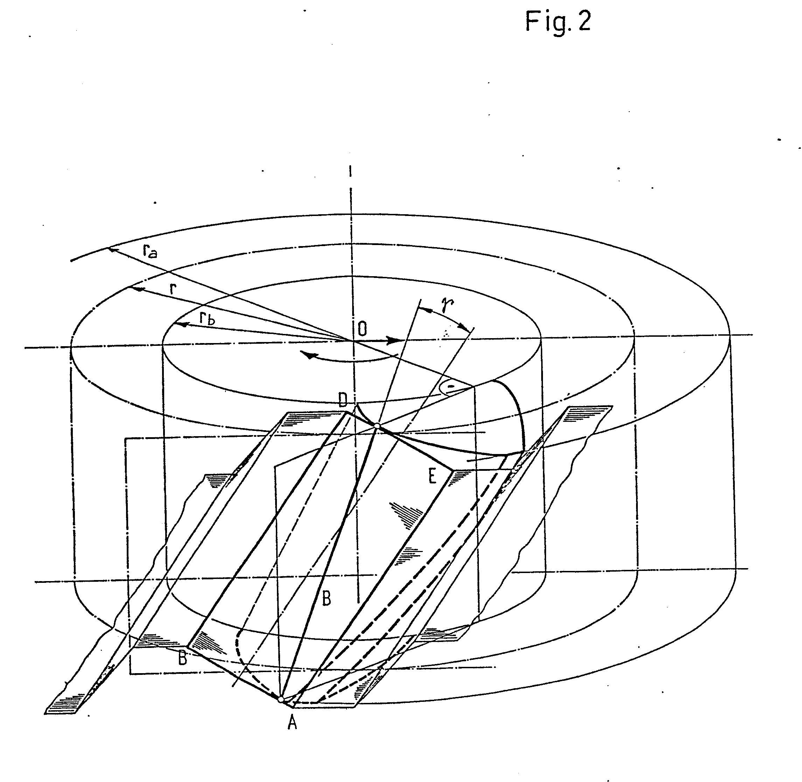

Fig. 1,2   die geometrischen Verhältnisse zwischen einem
           Schrägstirnrad und der zugehörigen Bezugs-Zahnstangenflanke in einer ersten und in einer zweiten Wälzstellung

Fig. 3     die Projektion der Erzeugungs-Zahnstangenflanke
           in die Stirnschnittebene in zwei Wälzstellungen
           und die geometrischen Beziehungen signifikanter
           Grössen,

Fig. 4     die Projektion der Erzeugungs-Zahnstangenflanke
           auf die Stirnschnittebene und der darübergezeichneten Umklappung der Erzeugungs-Zahnstangenflanke
           in diese Stirnschnittebene mit den geometrischen
           Beziehungen signifikanter Grössen,

Fig. 5     die Projektion der Erzeugungs-Zahnstangenflanke
           entsprechend Fig. 4 mit signifikanten geometrischen Grössen und Zusammenhängen für zwei Wälzstellungen,

Fig. 6     die Abwälzverhältnisse zwischen Zahnradflanke und
           Werkzeugfläche in verschiedenen Wälzstellungen
           nach dem Stand der Technik,

Fig. 7     die Abwälzverhältnisse zwischen Zahnradflanke und
           Werkzeugfläche in verschiedenen Wälzstellungen
           nach der Erfindung,

Fig. 8     eine Variante von Arbeitslinien zur Bearbeitung
           von Zahnflanken, die im wesentlichen entlang der
           Erzeugenden verlaufen,

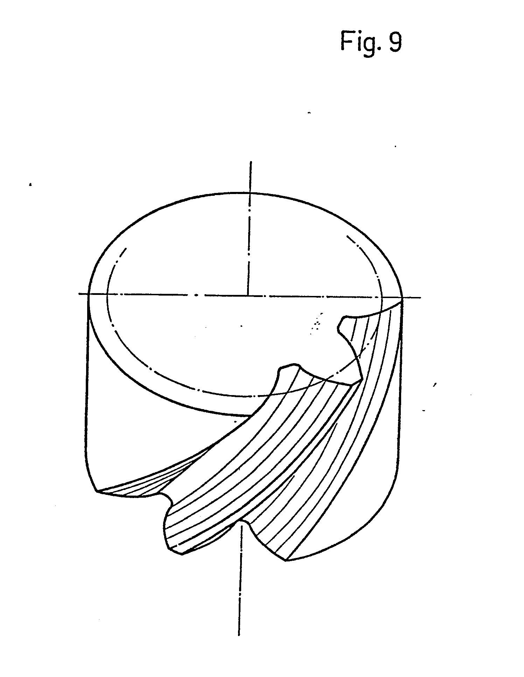

Fig. 9     eine andere Variante von Arbeitslinien, die im
           wesentlichen entlang von Schraubenlinien verlau-
           fen,

Fig.10a,b, verschiedene Schleifscheiben, welche für das
           erfindungsgemässe Verfahren geeignet sind,

Fig. 11    die gleichzeitig erzeugten Punkte des zweiten
           Fussteils der Zahnflankenevolvente und der Fussanschlusstrochoide,

Fig. 12    eine Darstellung der wesentlichen Bewegungsachsen
            beim erfindungsgemässen Verfahren, bei Verwendung
            einer Arbeitslinie mit erzeugendenförmigen Bestandteilen, wobei der Einfachheit halber die
            Situation für die Herstellung einer Geradverzahnung gezeigt ist,

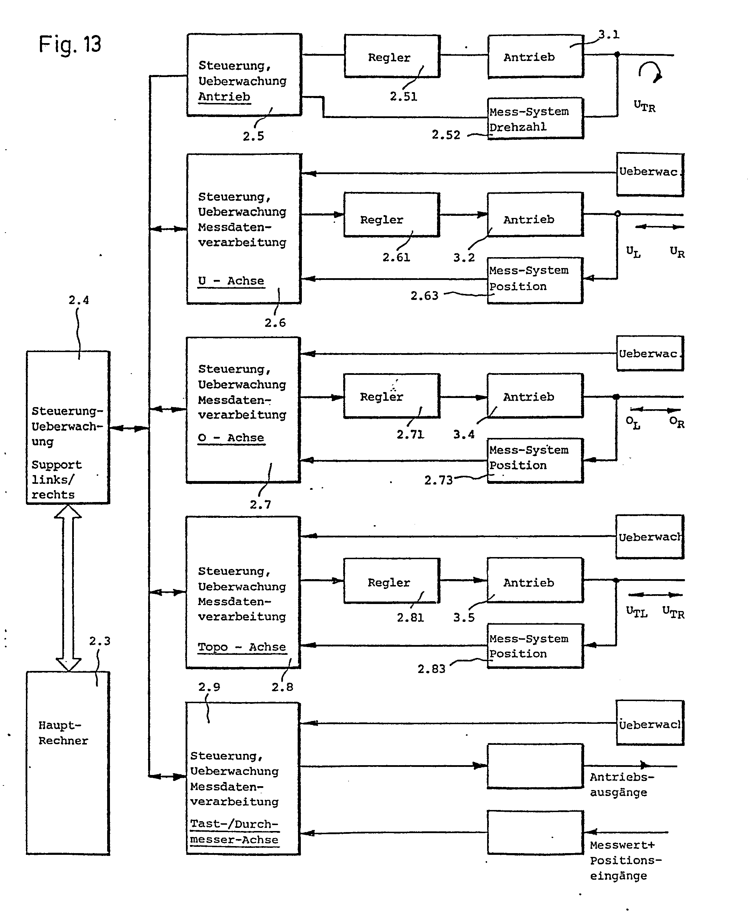

Fig. 13    eine Prinzipskizze einer Steuereinrichtung für
            eine Variante einer Bearbeitungsmaschine,

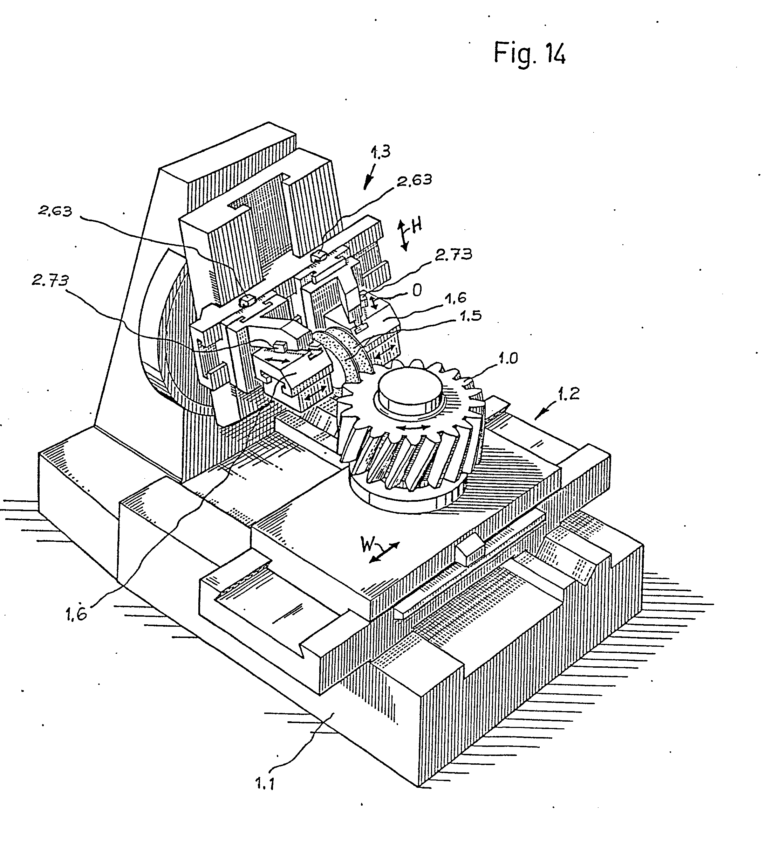

Fig. 14    die schematische Darstellung einer Variante bei
            Bearbeitungsmaschinen bei Verwendung einer Ar-
            beitslinie mit erzeugenden linienförmigen Be-
            standteilen,

Fig. 15a,b die schematische Darstellung einer anderen Vari-
            ante einer Bearbeitungsmaschine bei schrauben-
            linienförmiger Arbeitslinie,

Fig. 16    die zwei Arbeitspunkte beim bisherigen Verfahren
            bei einer erzeugendenförmigen Arbeitslinie und
            der Verwendung einer Tellerschleifscheibe.


Bei einer Verfahrensvariante zur Herstellung evolventenförmiger Zahnflanken von Zahnrädern wird das Werkstück im allgemeinen horizontal oder vertikal auf einen für die Ausführung von Wälzvorschubbewegungen eingerichteten Werkstücktische aufgespannt und die Zahnflanke relativ, zu wenigstens
einer Schleifscheibe an deren Arbeitsebene, die der Zahnflanke der Erzeugungszahnstange entspricht, abwälzend bewegt. Die Schleifscheibe führt eine rotative Schlittbewegung
und eine Hubvorschubbewegung im wesentlichen entlang einer
Erzeugenden der Zahnflanke als Arbeitslinie aus. Eine Zustellbewegung in Richtung auf die Zahnflanke bestimmt die
Spantiefe. Das Werkstück führt die Wälzvorschubbewegung aus
(Erzeugendenhüllschnitte).


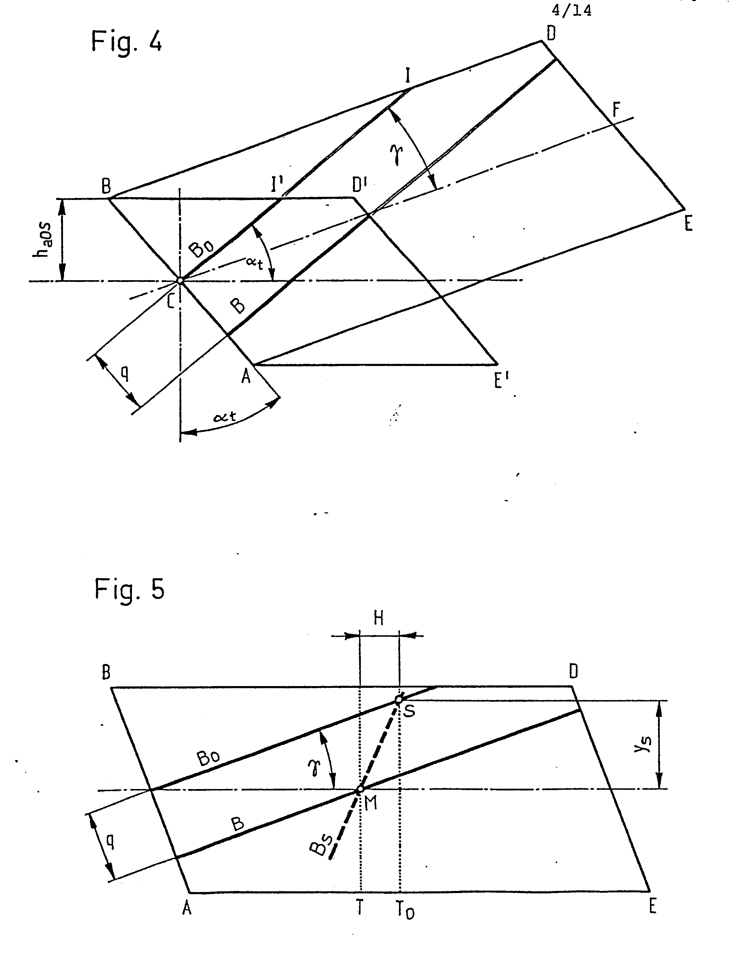

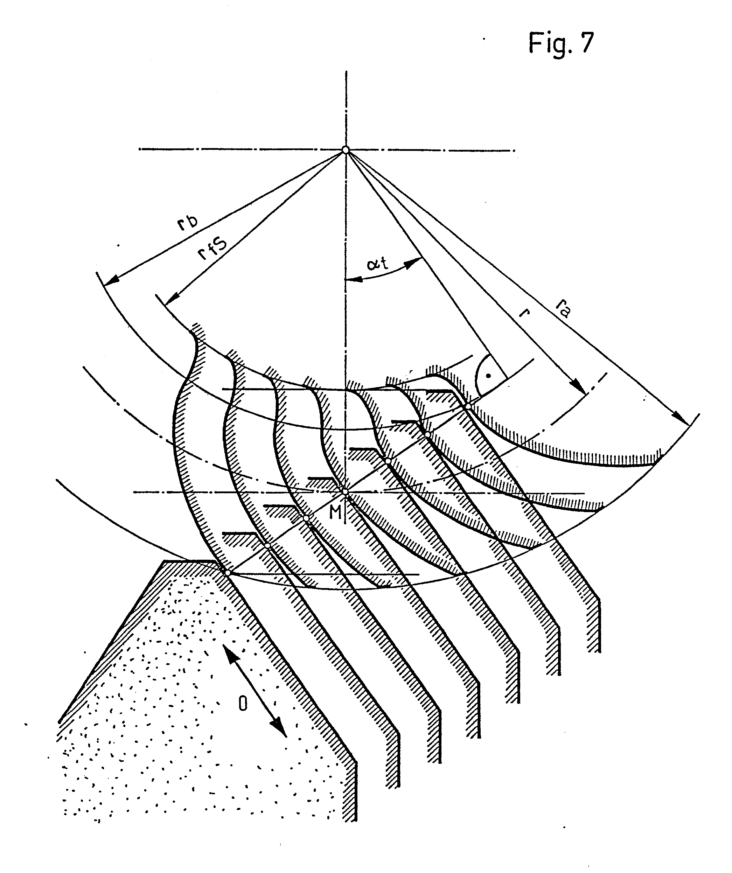

Zusätzlich zu diesen Vorschubbewegungen wird als Relativbewegung zwischen Werkstück und Werkzeug, also entweder von
der oder den Schleifscheiben oder dem Werkstück, eine zusätzliche Vorschubbewegung tangential an die Zahnflanke, vorzugsweise in Tangentialrichtung im Stirnschnitt, ausgeführt (Fig. 7). Die Schleifscheibe bewegt sich also mit ihrem momentanen und veränderlich wählbaren Arbeitspunkt in Flankenrichtung mit und der vorbestimmbare und wählbare Arbeitspunkt bewegt sich auf der Zahnflanke auf einer Erzeugenden als einer wählbaren Arbeitslinie, die auch Wirklinie genant wird. Der Arbeitspunkt auf der Schleifscheibe bleibt (abgesehen von deren Rotation) an einer Stelle und wandert nicht, wie bei den Verfahren nach dem Stand der Technik, über die gesamte Arbeitsbreite der Schleifscheibe entsprechend der Abwälzbewegung der Zahnflanke an ihr. Dadurch ist der Arbeitspunkt auf der Schleifscheibe vorbestimmbar und wählbar. Ausserdem wird er in einem vorgehbaren Arbeitsbereich der Schleifzone, der vom Schleifverfahren unabhängig ist, gehalten. Dieser Arbeitsbereich kann daher auch kleiner dimensioniert werden als bei den Verfahren nach dem Stand der Technik. Dies ist insbesondere bei beschichteten Werkzeugen von Vorteil, weil die Beschichtung auf einem kleineren Bereich aufgetragen werden kann. Insbesondere kann die zusätzliche Vorschubbewegung nach der Formel (Fig. 5)

$$ys = (w.\sin\alpha t).\cos\gamma + h.\text{tg}\gamma$$

gesteuert werden, wobei ist:

$ys$ ... Abstand des Arbeitspunktes S von einem Berührungspunkt M auf der Flanke

$w$ ... Wälzweg    ) werden laufend

$H$ ... Schleifhub ) gemessen

$\alpha t$ ... Eingriffswinkel im Stirnschnitt

$\gamma$ ... Winkel zwischen Erzeugende und Teillinie der Erzeugungs-Zahnflanke.

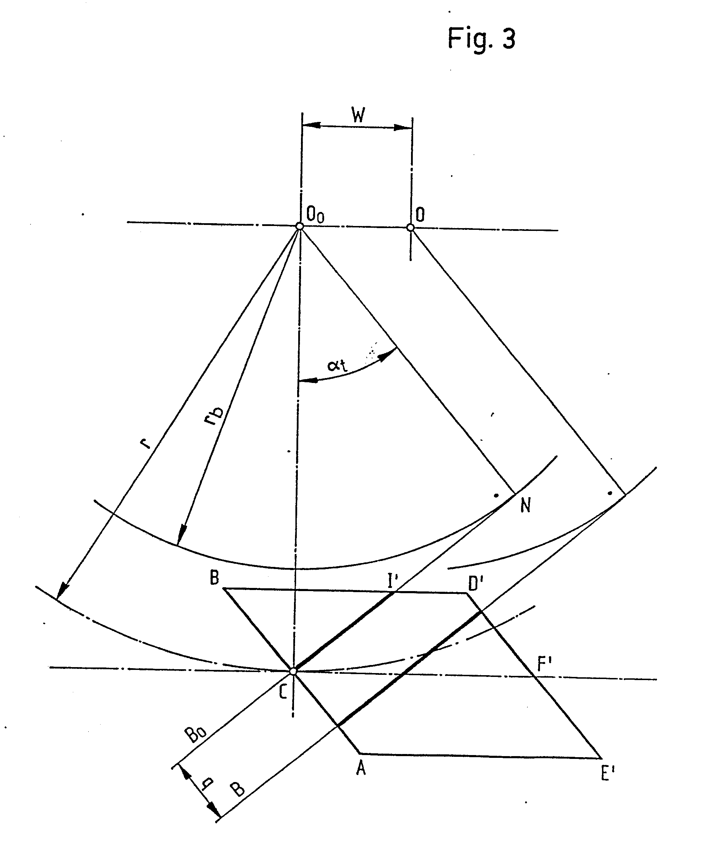

In der Ausgangsstellung der Wälzbewegung und des Schleifhubes ist die Berührungslinie zwischen Erzeugungszahnstangenflanke und Radflanke die Linie Bo und ein Arbeitsbereichmeridian die (punktierte) Linie To. Der Arbeitspunkt ist somit
der Schnittpunkt M dieser beiden Linien. Wie in der Fig. 3
und 5 dargestellt, entspricht der Abstand q zwischen der
Berührungslinie Bo und der Berührungslinie B dem Wälzweg w
und hängt mit diesem gemäss der Formel

$$q = w \cdot \sin\alpha t$$

zusammen. Somit wandert bei einem Wälzweg w in einem
Schleifhub h der Arbeitspunkt nach S. der Abstand ys vom
Ausgangspunkt M, der als Bezugspunkt und vorteilhafterweise
als "Mittelpunkt" der Flankenverebnung, d.h. der Erzeugungs-
zahnstangenflanke, gewählt wird, berechnet sich dann nach
oben angegebener Formel. Dieser zusätzlichen Vorschubbewegung z.B. der Schleifscheibe ist eine Arbeitspunktbewegung
überlagerbar, welche diskontinuierlich oder kontinuierlich
den Arbeitspunkt schrittweise relativ zu deren Arbeitsbereich vorbestimmbar verlagert. Es kann also der Arbeitspunkt
beispielsweise während einer Anzahl von Schleifscheibenumdrehungen in einer bestimmten Entfernung vom inneren oder
äusseren Rand der Arbeitsfläche gehalten und anschliessend
für die nächste Umdrehungszahlgruppe (Versetzzyklus) in eine
benachbarte Position gebracht werden; bis der gesamte oder
ein vorbestimmbarer Teil vom Arbeitsbereich des Werkzeuges
bestrichen ist. Anschliessend wird ein neuer Versetzzyklus
eingeleitet. Bei der kontinuierlichen, vorbestimmbaren Verlagerung des Arbeitspunktes wird von diesem im Arbeitsbereich während einem Versetzzyklus eine spiralförmige Bahn
beschrieben. Es ist jedoch nicht zwingend, dass diese Arbeitspunktverlagerung zyklusartig vorgenommen wird. Auch
könnte von kreisförmiger Bahn zu kreisförmiger Bahn gesprungen werden.

Die Steuerung der Arbeitspunktverlagerung erfolgt nach vorbestimmbaren Bedingungen oder Werten. Diese Werte oder Bedingungen sind in irgendeiner Form auf einem Datenträger gespeichert: Beispielsweise als eine Kurvenlineal- oder Kurvenscheibensteuerung, eine Messpunkt- oder Impulssteuerung durch Abtasten des Werkzeuges zur Berücksichtigung des Verschleisses oder dessen Optimierung bzw. zur besseren Werkzeugnutzung, oder als Impulsgebermittel, elektronische Datenträger, Massenspeicher oder dgl. Insbesondere die letzteren können, für sich allein oder in Verbindung mit der Messpunktsteuerung, Erfahrenswerte enthalten, für welche optimale Flankeneigenschaften erhalten werden.

Beim Schleifen der Zahnflanke ohne topografische Korrektur wird die Zustellbewegung in an sich bekannter Weise ausgeführt. Wird hingegen die Zahnflanke mit topografischer Korrektur d.h. mit einem Profil, das über die Zahnbreite veränderlich ist, geschliffen, dann wird entweder der Zustellbewegung eine Korrekturbewegung überlagert oder eine solche zusätzlich, insgesamt also mehrstufig, ausgeführt. Dies ist im wesentlichen eine Frage der Steuerung: je nachdem, welche Werte man als Bezugswert bzw. Ausgangswert für die Zustellung verwendet. Von diesem Bezugswert aus muss man in jedem Korrekturpunkt gesamthaft zustellen - ein- oder mehrstufig. Die Zuordnung der Korrekturwerte zu den einzelnen Punkten der Zahnflanke ist an sich bekannt und erfolgt vorzugsweise in einem Koordinantensystem des Eingriffsfeldes. Dabei kann die Zustellbewegung das Werkstück oder das Werkzeug ausführen.

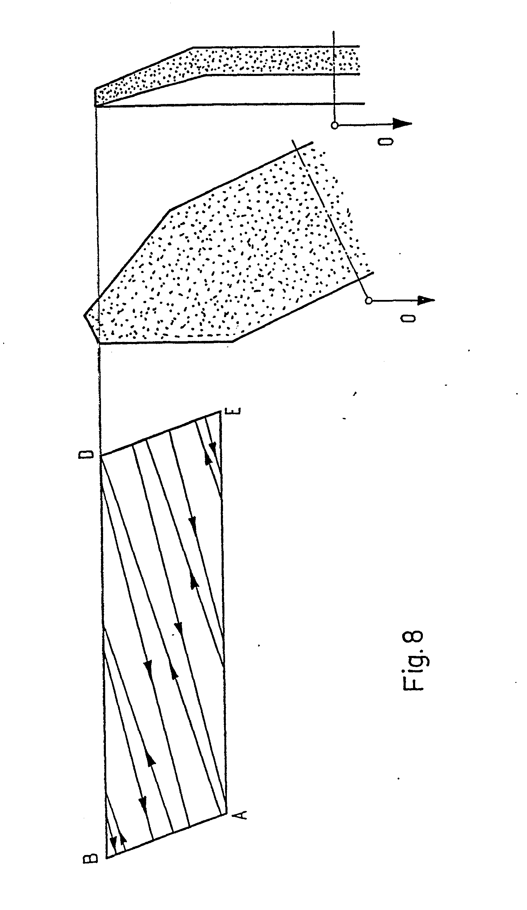

Bei diesem Verfahren kann die eingangs genannte Arbeitslinie die Form einer Zick-Zack-Linie aufweisen, wobei die einzelnen Abschnitte im wesentlichen entlang je einer Erzeugenden der Zahnflanke verlaufen (Fig. 8). Die praktische Arbeitslinie wird allerdings immer etwas von der theoretischen Arbeitslinie abweichen. Bei dieser Arbeitslinie führt das Werkstück - oder bei sehr grossen Werkstücken das Werkzeug - eine kontinuierliche Wälzvorschubbewegung aus. Zusätzlich dazu werden die Werkzeuge mit einer Hubvorschubbewegung entlang der Zahnflanke verfahren. Eine andere Form ist eine mäanderartige Linie, bei welcher der Arbeitspunkt während einer Hubvorschubbewegung entlang einer Erzeugenden oder wenigstens nahezu einer Erzeugenden als einem Ast des Abschnittes und zur Weiterschaltung von einer Erzeugenden zu einer bearbeitungstechnisch relevanten benachbarten Erzeugenden entlang einer Profillinie unter Umständen einer Flankenlinie - je nach der Lage des Umkehrpunktes relativ zur Zahnflanke im Bewegungsablauf des Schleifvorganges - als einem zweiten Ast des Abschnitts der Arbeitslinie geführt wird. Bei dieser Form der Arbeitslinie erfolgt eine diskontinuerliche Wälzvorschubbewegung des Werkstückes oder eine entsprechende Bewegung der Werkzeuge, wenn sich diese bei stillstehendem Werkstück um dieses bewegen. Die Werkzeuge führen dabei, bzw. zusätzlich, die Hubvorschubbewegung aus.

Bei einer anderen Verfahrensvariante zur Herstellung evolventenförmiger Zahnflanken von Zahnrädern wird das Werkstück wie üblich auf einem Arbeitstisch aufgespannt, welcher Wälzvorschubbewegungen ausführen kann. Wird der Arbeitstisch zusätzlich zu den kontinuierlichen Wälzvorschubbewegungen noch rotativ bewegt und abgestimmt dazu das oder die Werkzeuge in Richtung der Zahnradachse verfahren, dann verschiebt sich der Arbeitspunkt entlang einer Arbeitslinie von der Gestalt einer schraubenlinienförmigen Zick-Zack-Linie auf der Zahnflanke (Flankenlinienhüllschnitte). Dabei ist die Wälzvorschubbewegung, die rotative und die axiale Vorschubbewegung aufeinander abgestimmt vorzunehmen, sodass der Arbeitspunkt immer auf der Zahnflanke liegt. Es wird also einer Schraubenlinienbewegung eine Wälzbewegung überlagert. Damit der wählbare Arbeitspunkt oder dessen Umgebung - wobei die Grösse derselben von der Form der Schleifscheibe abhängt - im wesentlichen immer entlang dieser Arbeitslinie geführt wird, führt die Schleifscheibe noch eine zusätzliche Vorschubbewegung aus, deren Richtung in der Arbeitsebene der Schleifscheibe, also in einer Tangentialebene der Zahnflanke, liegt. Die Steuerung dieser Bewegungen kann als kombinierte mechanisch-elektronische Steuerung unter Verwendung von bekannten Einrichtungen, beispielsweise zur Erzeugung der Wälzvorschubbewegungen und von Einzelmotorantrieben erfolgen, wobei entsprechende Positionsgeber an die Regel- und Steuerkreise angeschlossen sind. Es ist aber auch möglich, diese Bewegungen rein elektronisch zu steuern, wobei die Sollwerte auf den verschiedensten Datenträgern, beispielsweise mechanischen, wie z.B. Kurvenscheiben oder Profillinealen etc., magnetischen, optischen usw., gespeichert und mit den entsprechenden Ablese- und Uebertragungs- und Steuermitteln an die Antriebsorgane weitergeleitet werden.

Es ist aber auch die diskontinuierliche Steuerung der Wälzvorschubbewegung möglich, wobei diese nur schrittweise ausgeführt wird. Dabei wird der Arbeitspunkt entlang einer Schraubenlinie der Zahnflanke geführt und im Bereich deren Enden eine Weiterschaltbewegung in Form einer Wälzvorschubbewegung vorgenommen, womit der nächste Hüllschnitt erfolgen kann. So wird Hüllschnitt an Hüllschnitt gelegt. Die Wälzvorschubbewegung kann vom Werkstück oder von dem wenigstens einen Werkzeug ausgeführt werden. Die Arbeitslinie hat dann mäanderförmigen Verlauf, und ihre Abschnitte bestehen aus zwei Aesten: einer Flankenlinie und einer Profillinie. Dabei wird diese als Weg der Weiterschalt-Vorschubbewegung im allgemeinen auf der virtuell verlängerten Zahnflanke liegen, also ausserhalb der Radzahnflanke. Damit der Arbeitspunkt trotz des Weiterschaltens relativ zur Arbeitsfläche des Werkzeuges, etwa der jeweiligen Schleifscheibe, in der gleichen Lage gehalten wird, muss die zusätzliche Vorschubbewegung des Werkezuges entsprechend der Weiterschalt-Vorschubbewegung, also der Wälzbewegung, vorgenommen werden.

Soll der Arbeitspunkt innerhalb des Arbeitsbereiches des Werkzeuges kontinuierlich oder diskontinuierlich verschoben werden, um eine gleichmässige Werkzeugabnützung zu erzielen oder die Werkzeugabnützung den wirtschaftlichen Einflussgrössen des Bearbeitungsvorganges anzupassen, die Werkzeugabnützung also bezüglich dem Bearbeitungsvorgang zu optimieren, dann wird noch eine Arbeitspunktbewegung ausgeführt. Diese kann der zusätzlichen Vorschubbewegung überlagert oder gesondert zu dieser vorgenommen werden. Dabei wird der veränderlich wählbare Arbeitspunkt, der auch Wirkpunkt genant wird, relativ zum Werkzeug auf dessen Arbeitsfläche, d.h. der wirksamen Schnittfläche, verschoben. Dies kann nach einer spiralförmigen Linie kontinuierlich oder von Kreislinie diskontinuierlich oder abschnittweise, eventuell via Zufallszahlen gesteuert, erfolgen, um eine möglichst gleichmässige und musterlose Abnutzung der Schleifscheibe zu erzielen.

Auch bei dieser Verfahrensvariante können zusätzlich zu der normalen Zustellbewegung noch normale oder topografische Korrektur-Zustellbewegungen vorgenommen werden. Diese können wieder in bekannter Weise vom Eingriffsfeld aus gesteuert und sowohl vom Werkstück als auch vom Werkzeug vorgenommen werden: rein rotativ oder translativ.

Bei beiden Verfahrensvarianten ist eine weitere Bewegung ausführbar: die im allgemeinen nicht kontinuierlich ausgeführte Verstellung des Werkzeugträgers um einen Variationsbetrag des Schrägungswinkels von Schrägzähnen $\beta$. Diese Verstellung ermöglicht insbesondere bei der Verwendung von Tellerscheiben herkömmlicher Bauart eine wesentliche Verkleinerung der Umgebung des Arbeitspunktes auf nahezu exakt einen Punkt. Diese Bewegung kann ebenfalls wie die anderen Bewegungen programmgesteuert vorgenommen werden, wobei auch hier das Programm auf mechanisch, oder magnetisch etc. auslesbaren Datenträgern gespeichert und mit entsprechenden Datenübertragunsmitteln, beispielsweise mechanischen, optischen, elektronischen oder magnetischen Mitteln, zum Einsatz gebracht wird.

Bei diesen Verfahrensvarianten ergibt sich je nach Arbeitslinie eine unterschiedliche Hüllschnittvernetzung. Durch
eine geeignete Abstimmung der Vorschub- und Zustellbewegungen bzw. der entsprechenden Grössen kann diese Hüllschnittvernetzung jeweils optimal gestaltet werden.

Werden Verfahren mit Arbeitslinien mit schraubenlinienförmigen oder Schraubenlinien aus Bestandteilen verwendet, ergibt
sich der wesentliche Vorteil, dass der Werkzeugträgerkopf
der Bearbeitungsmaschine nicht entlang einer geneigten Geraden, sondern entlang einer Vertikalen bewegt wird. Dadurch
wird die Maschine nicht durch die je nach Arbeitsgeschwindigkeit recht erheblichen Belastungen durch die Gewichtsverlagerung des Werkzeugträgerkopfes belastet. Dies fördert
ganz wesentlich die Herstellungsgenauigkeit der Werkstücke.

Es stellt einen wesentlichen Vorteil dar, wenn man die Korrektur-Zustellbewegungen vom Werkstück ausführen lassen
kann, da dann Werkzeugbewegungen eingespart werden. Die
Stabilität der Maschine kann dadurch erheblich erhöht und
Schwingungen vermieden werden.

Je nach Anwendungsfall können bei den Verfahrensvarianten
mit den schraubenlinienförmigen Bestandteilen in der Arbeitslinie die Hüllschnitte einerseits konzentrisch oder
quasikonzentrisch und andererseits in ihrer Breite gesteuert
verändert werden. Insbesondere kann man die Hüllschnittbreite im Bereich von Zahnkopf und Zahnfuss verschieden breit
ausführen.

Werden nur einfache Fuss- oder Kopfkorrekturen ausgeführt,
dann können diese bei den Flankenlinienhüllschnitten durch
einfache Relativbewegungen erzeugt werden. An sich ist die
Berechnung und Ausführung der Flankenkorrekturen hier
einfacher, da die Hüllschnitte von Flankenlinien begrenzt
sind. Beispielsweise werden bei der normalen Profilkorrektur während einem ganzen Schleifhub gleiche Werte verwendet. Bei
Wahl von entsprechenden Werten für die Korrekturparameter
können Profilkorrekturen auch mit tangentialen Bewegungen
erzeugt werden. Grundsätzlich möglich ist aber auch die
Verwendung von korrigierten Werkzeugen, beispielsweise
Schleifscheiben, Frässcheiben. Aber auch einen Fingerfräser
oder dgl. sind verwendbar. Ebenso sind bei der Ausführung
von Längskorrekturen für jeden Hüllschnitt immer gleiche
Werte eingestellt.

Für beide beispielsweise beschriebene Verfahrensvarianten,
also mit den erzeugendenförmigen und mit den schraubenlinienförmigen Bestandteilen in der Arbeitslinie, ist vorteilhaft, dass topografische Korrekturen exakter als bisher,
weil praktisch mit einem Arbeitspunkt erzeugt, durchführbar
und die gewünschten Korrekturwerte frei vorgebbar sind.
Ausserdem können Schleifscheiben mit ebenen oder kegelförmigen Arbeitsflächen verwendet werden. Diese Arbeitsflächen
sind einfach herzustellen und zu warten.

Je nach Anwendungsfall wird man zwischen beiden Verfahrensvarianten wählen. Wenn beispielsweise nur sehr klein oder
fast keine Profilunterschiede zwischen den Zahnenden und der
Zahnmitte auftreten sollen und mit kontinuierlichen Wälzvorschub gearbeitet werden muss, dann ist das als zweites Beispiel beschriebene Verfahren mit den schraubenlinienförmigen
Bestandteilen der Arbeitslinie vorteilhaft.

Beide Verfahren benötigen keine werkstückgebundene Werkzeuge
und keine Werkzeugkorrektureinrichtungen mit all den damit
verbundenen Wart- und Prüfarbeiten.

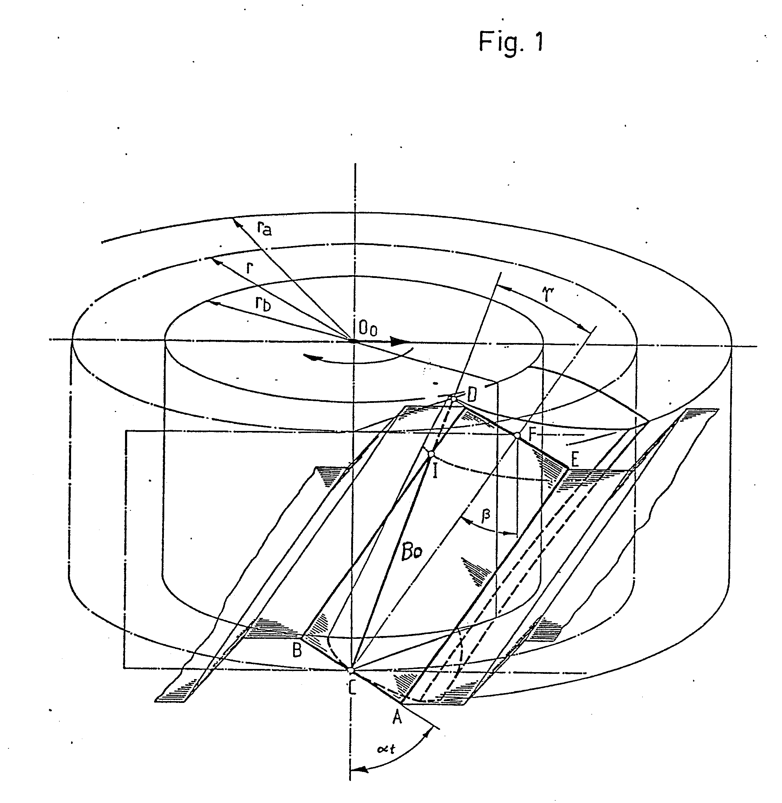

Eine beispielsweise Variante einer Bearbeitungsmaschine des
Verfahrens zur Herstellung eines Zahnrades 1.0. unter der
Verwendung von Erzeugenden oder erzeugendenförmigen Abschnitten der Arbeitslinie weist wie üblich einen Maschinenrahmen 1.1. auf, der einerseits einen Wälzschlitten 1.2 verschiebbar trägt und andererseitsseits die an sich bekannten, zur Einstellung der Zahnschräge verschwenkbar montierten Kreuzschlittenanordnungen 1.3 für die Werkzeugträger 1.4, auf welchen die Werkzeuge, beispielsweise Schleifscheiben 1.5, sitzen. Zur Ausführung der zusätzlichen Vorschubbewegung, mit der der Arbeitspunkt jeder der Schleifscheiben 1.5 tangential an die herzustellende Zahnflanke geführt wird, ist ein entsprechend einstellbarer Vorschubschlitten 1.6 vorgesehen. Vorzugsweise sind an allen Schlitten Weggeber oder sonstige Positionsgeber 1.7 vorgesehen. Diese Positionsgeber 1.7 sind mit einer Steuereinrichtung 2.0 (in Fig. 1 nicht dargestellt) verbunden. Diese Steuereinrichtung kann eine rein elektronisch oder eine mechanisch und elektronisch arbeitende Steuereinrichtung sein. Beispielsweise können die Wälzbewegungen in herkömmlicher Weise von einer Wälzbandsteuerung abgenommen werden. Auch die Antriebsmotoren weisen Drehzahlgeber 2.2 (nicht dargestellt in Fig. 1) auf, welche mit der Steuereinrichtung 2.0 verbunden sind. Es wird der Einfachheit halber angenommen, die in Fig. 1 dargestellte Bearbeitungsmaschine enthalte eine solche elektromechanische Steuereinrichtung, wobei die Wälzband-Steuereinrichtung als an sich bekannt in der Fig. 1 nicht dargestellt und auch nicht beschrieben ist. Eine solcherweise aufgebaute Steuereinrichtung weist einen Hauptrechner 2.3 auf, der die grundsätzlichen Steuerprogramme enthält und verarbeitet. Er ist mit einer Hauptsteuereinrichtung 2.4 für die Steuerung und Ueberwachung jedes Werkzeugträgers 1.4 und der anderen, nicht besonders aufgeführten Bewegungen, wie beispielsweise der Hubvorschubbewegungen, der Einstellbewegungen des Zahnschrägewinkels $\beta$ und seiner Variationen vom Sollwert, Positionierbewegungen des Werkstückes, sowie anderen notwendigen und an sich bekannten Bewegungen (nicht bezeichnet in Fig.1) verbunden. Diese Hauptsteuereinrichtung 2.4 ist je an eine Schleifscheibensteuereinrichtung 2.5, eine Eingriffswinkel-, Zahnschrägewinkel und Zwischenschlittensteuerung 2.6, eine

0180747

Steuerung 2.7 für die zusätzliche Vorschubbewegung, eine Steuerung 2.8 für die Zustellbewegungen sowohl der normalen Spanzustellung wie auch der normalen und topografischen Korrekturen, eine Steuerung 2.9 für die Schleifscheibenmesseinrichtungen zur Erfassung des Schleifscheibenverschleisses und zur Vornahme der Durchmesserkompensation etc. angeschlossen.

An der Schleifscheibensteuereinrichtung 2.5 liegt ein Regler 2.51, der an einen Schleifscheibenantrieb 3.1 angeschlossen ist. Mit diesem verbunden ist ein Drehzahlmesssystem oder Drehzahlgeber 2.2, das auch an der Schleifscheibensteuereinrichtung 2.5 liegt. Dieser Regelkreis dient der genauen Drehzahlregelung in Zusammenwirken mit den anderen gesteuerten Bewegungen und Maschinenfunktionen.

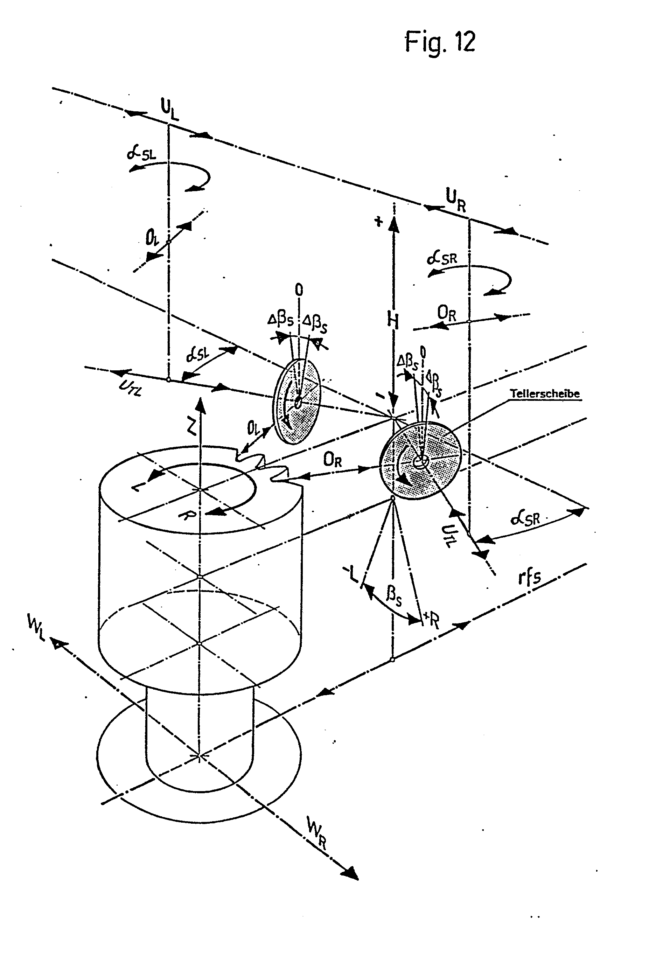

An der Zwischenschlitten-, Eingriffs- und Zahnschrägewinkelsteuereinrichtung 2.6 liegt eine Ueberwachungseinrichtung 2.62 zur Positionsrückmeldung und ein zweiter Regler 2.61, der einerseits an einen Zwischenschlittenantrieb zur Positionierung gemäss je einer in Fig. 12 mit Ur bzw. Ul bezeichneten Steuerachse der Bearbeitungsmaschine und andererseits an einem Antrieb 3.3 zur Einstellung des Eingriffswinkels und/oder des Zahnschrägewinkels angeschlossen ist. Der Zwischenschlittenantrieb 3.2 liegt an einem Positionsgeber 2.63, der seinerseits an der Eingriffs-, Zahnschrägewinkel- und Zwischenschlittensteuereinrichtung 2.6 liegt. Der Antrieb 3.3 zur Einstellung des Eingriffswinkels und/oder des Zahnschrägewinkels $\alpha$ bzw. $\beta$ liegt ebenfalls an einer Positionsmesseinrichtung 2.64 (die in Fig. 8 zufolge der hier verwendeten Kegelscheiben nicht gezeichnet ist), deren Messdaten auch an die Eingriffs-, Zahnschrägewinkel- und Zwischenschlittensteuereinrichtung 2.6 abgegeben werden. Die Solldaten für jede Position werden dieser Steuereinrichtung 2.6 von der Hauptsteuereinrichtung 2.4 geliefert und jene retourniert selbst ihre eigenen Daten an diese.

Die Steuereinrichtung 2.7 für die zusätzliche Vorschubbewegung liegt ebenfalls mit ihrem Ein-/Ausgang an der Hauptsteuereinrichtung 2.4 und mit einem Eingang an einer Ueberwachungseinrichtung 2.72 für die Positionen der gesteuerten Teile. Sie liegt auch an einem dritten Regler 2.71, der den Antrieb 3.4 für die zusätzliche Vorschubbewegung steuert. An diesem Antrieb liegt ein Positionsmesssystem 2.73, das seine Messdaten der Steuereinrichtung 2.7 für die zusätzliche Vorschubbewegung einspeist.

An der Steuereinrichtung 2.8 für die normalen und die topografischen Korrekturen der Zahnflanke liegt eine Ueberwachungseinrichtung 2.82 für die Endlagen und Arbeitspositionen der Führungsmittel. An der Steuereinrichtung 2.8 liegt ein vierter Regler 2.81 für den Antrieb 3.5 der Zustell- und Korrekturbewegungen des bzw. jedes Werkzeuges 1.5. Dieser Antrieb kann aber auch auf eine mit dem Werkstück verbundene Maschinenachse wirken, sodass die Zustellbewegung vom Werkstück 1.0 erfolgt. An diesem Antrieb liegt eine Positionsmesseinrichtung 2.83, welche ihre Signale an die Steuereinrichtung 2.8 für die Zustell- und Korrekturbewegungen gibt.

Alle diese Steuereinrichtungen 2.5 bis 2.9 kommunizieren mit der Hauptsteuereinrichtung 2.4 und diese steht im Signalaustausch mit dem Hauptrechner 2.3, sodass alle Bewegungen aufeinander abgestimmt und unter Berücksichtigung der Regel- und Messdaten gesteuert werden.

In der Fig. 12 sind die wichtigsten (nicht alle) zu steuernden Maschinenachsen eingetragen. Dabei bedeutet

Wl, Wr .... die beiden Aeste der Wälzbewegung rfs

rfs .... die Positionierachse zwischen Werkzeugen und Werkstück

Utl, Utr .. die Zustellachsen für die Spanzustellung und die Korrekturzustellung

Ol, Or .... die Achsen der zusätzlichen Vorschubbewegung

$\alpha$sl, $\alpha$sr .. die Eingriffswinkeleinstellachsen

Ul, Ur .... Zwischenschlittenachsen

$\beta$s ,$\Delta\beta$s... Zahnschrägewinkel und seine Variation

H ......... Werkzeughub.


Als Schleifwerkzeuge 1.5 werden bevorzugt Schleifscheiben
verwendet. Diese können der grundsätzlichen Form nach im wesentlichen bekannte Teller- oder Doppelkegelscheiben sein,
wie sie in den Fig. 10 a, und 10 b dargestellt sind. Die
Arbeitsbereiche können zufolge der verfahrensgemässen zusätzlichen Vorschubbewegung wesentlich schmäler als bei den
herkömmlichen Schleifverfahren gehalten werden. Eine besonders vorteilhafte Form einer Schleifscheibe ist in Fig. 10
c dargestellt. Sie ist eine modifizierte Tellerscheibe und
weist anstelle eines ebenen Arbeitsbereiches einen kegelstumpfförmigen mit einem Kegelwinkel etwas kleiner als 180
Grad auf. Sie vereinigt die Vorteile der Teller- mit der
Kegelscheibe.


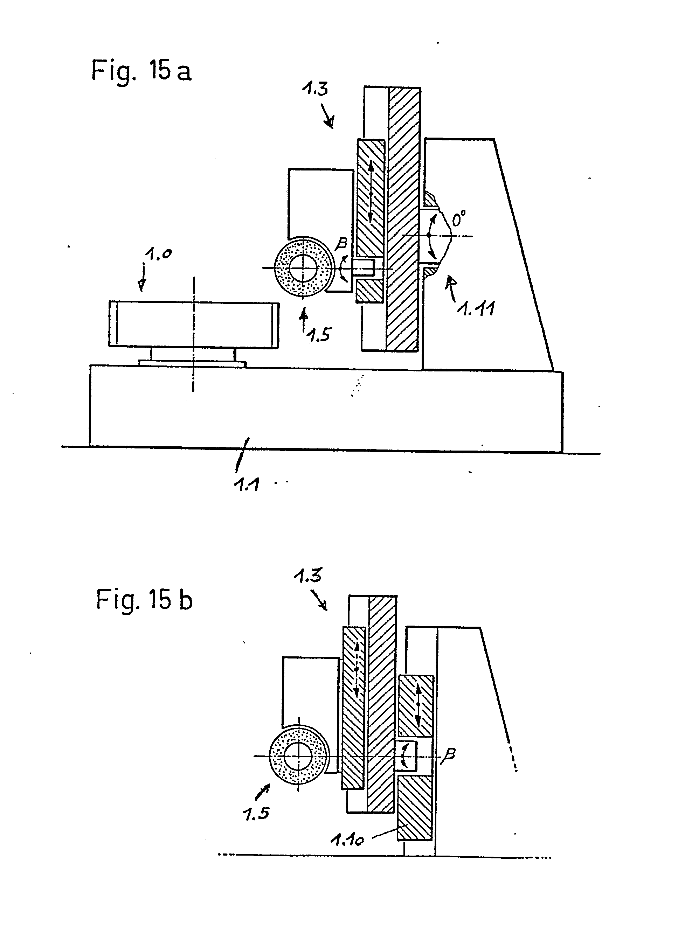

Eine beispielsweise Vorrichtung für die Durchführung des
Schleifverfahrens unter der Verwendung einer Arbeitslinie
mit schraubenlinienförmigen Bestandteilen kann der oben
beschriebenen Vorrichtung weitgehend ähnlich sein. Sie weist
auch einen Maschinenrahmen auf, welcher einerseits einen
Wälzschlittenanordnung verschiebbar trägt und andererseits
die an sich bekannten, zur Einstellung der Zahnschräge verschwenkbar montierten Kreuzschlittenanordnungen für die
Werkzeugträger aufweist. Für die schraubenlinienförmige
Arbeitslinie muss jedoch ein Teil des Schlittenkomplexes
axparallel zum Werkstück in einer Hubvorschubbewegung führbar sein. Dafür ist ein weiterer Schlitten 1.10 (Fig. 15 b)
oder eine zusätzliche Schwenkachse 1.11 (Fig. 15 a) zwischen
dem Maschinenrahmen und einem Schlitten vorgesehen oder es
werden die Bewegungen so gesteuert, dass die resultierende
Bewegung auch dieser Hubvorschubbewegung entspricht. Der
Unterschied liegt im wesentlichen in der zeitlichen Steuerung der einzelnen Bewegungen zur Erzielung der Zahnflankenform. Die Steuerung dieser Bewegungen ist durch die Anordnung von Einzelantrieben für jede Bewegung am einfachsten
realisierbar. Die Zahnschräge wird hier nicht durch einen
schräg gegen die Radachse ausgeführte Hubbewegung eines
Hubvorschubschlittens oder einer entsprechenden Schlittenanordnung erzielt, sondern durch einen parallel zur Zahnradaxe
verfahrbaren Schlitten, wobei zur Erzielung der Schraubenlinie als Arbeitslinienteilstück das Werkstück auf dem Werkstückträger rotativ angetrieben wird. Erst am Ende der Flankenlinie erfolgt die Weiterschaltung zur Erzeugung des nächsten Hüllschnittes durch den Wälzantrieb auf das Werkstück
durch einen elektronisch gesteuerten Antrieb oder eine herkömmliche Wälzbandsteuerung. Für die Ausführung der normalen
oder topografische Korrekturen sind Steuermittel vorgesehen,
welche mit den Antrieben für die einzelnen Bewegungsaxen
zusammeewirken. Die Bewegungsabläufe sind auf mechanischen,
magnetischen, optischen oder elektrischen Datenträgern festgelegt. Sie können so vorgenommen werden, dass die Korrekturzustellung vom Werkstück rein rotativ oder rein translativ oder in einer Kombination von beiden vorgenommen wird.
Dabei werden die Antriebe so aktiviert, dass diese gewünschten resultierenden Bewegungen entstehen. Die zusätzliche
Drehung des Radtisches beträgt dabei

$$nt = Fk/db.$$

wobei bedeutet  $Fk$ ... Flankenkorrekturwert

$db$ ... Grundkreisdurchmesser

$nt$ ... zusätzliche Drehung des Radtisches

Die Steuerung für die Hüllschnittoptimierung ist auch in
gleicher Weise als Folge von mit den Positionsgebern zusammenwirkenden Signalfolgen auf Datenträgern gespeichert und
in die Steuerung der einzelnen Bewegungsfolgen einspeisbar.

0180747

Die notwendige Spielfreiheit im Antrieb kann mit den üblichen Antrieben nur sehr schwer oder nur sehr aufwendig erreicht werden. Z.B. wäre dazu ein Doppelschneckenantrieb für den Werkstücktisch erforderlich. Mit der durch Befehlsfolgen gesteuerten Einzelantriebsanordnung lässt sich diese Spielfreiheit jedoch ohne weiteres erzielen.

PATENTANSPRUECHE

1. Verfahren zur Herstellung evolventenförmiger Zahnflanken ohne oder mit geometrisch möglichen Korrekturen auf einer Maschine mit wenigstens einem Werk- Vorschub- und Zustellbewegungen ausgeführt werden dadurch gekennzeichnet, dass die Arbeitsberührung zwischen Werkstück und Werkzeug auf diesem immer nur an einem und wählbaren Arbeitspunkt oder dessen näherer Umgebung vorgenommen wird und dass die Vorschubbewegungen so ausgeführt werden, dass der Arbeitspunkt im wesentlichen entlang einer wenigstens nahezu auf der Zahnflankenfläche liegenden, wahlweise bestimmbaren Arbeitslinie zur Erzeugung der Hüllschnitte geführt wird.

2. Verfahren nach Anspruch 1, dadurch gekennzeichnet, dass der wählbare Arbeitspunkt des Werkzeuges oder dessen nähere Umgebung während des Bearbeitungsvorganges durch eine zusätzliche Vorschubbewegung (0) des Werkzeuges in einem vorgebbaren Arbeitsbereich desselben gehalten wird.

3. Verfahren nach Anspruch 1, dadurch gekennzeichnet, dass der wählbare Arbeitspunkt des Werkzeuges oder dessen nähere Umgebung während des Bearbeitungsvorganges durch eine zusätzliche Vorschubbewegung (01) des Werkzeuges und durch eine zusätzliche Vorschubbewegung (02) des Werkstückes auf das Werkzeug zu in einem vorgebbaren Arbeitsbereich desselben gehalten wird.

4. Verfahren nach Anspruch 3, dadurch gekennzeichnet, dass die zusätzliche Vorschubbewegung (01) des Werkzeuges entlang der Symmetriefläche der Zahnlücke vorgenommen wird.

5. Verfahren nach Anspruch 3, dadurch gekennzeichnet, dass die zusätzliche Vorschubbewegung (02) des Werkstückes auf das Werkzeug zu als eine translatorische rotatorische oder reine Wälz-Vorschubbewegung vorgenommen wird.

6. Verfahren nach Anspruch 2 oder 3, dadurch gekennzeichnet, dass der wählbare Arbeitspunkt des Werkzeuges oder dessen nähere Umgebung während des Bearbeitungsvorganges durch eine dem Werkzeugverschleiss angepasste, steuerbare Arbeitspunktbewegung (X) kontinuierlich oder diskontinuierlich im Arbeitsbereich vorbestimmbar verlagert wird.

7. Verfahren nach Anspruch 2 oder 3, dadurch gekennzeichnet, dass die zusätzlichen Vorschubbewegungen (O; O1, O2) mit den anderen Vorschubbewegungen zur Herstellung einer evolventenförmigen Zahnflanke nach ihren Erzeugendenhüllschnitten verkoppelt werden, welche entlang der Arbeitslinie verlaufen.

8. Verfahren nach Anspruch 2 oder 3, dadurch gekennzeichnet, dass die zusätzlichen Vorschubbewegungen (O; O1, O2) mit den anderen Vorschubbewegungen zur Herstellung einer evolventenförmigen Zahnflanke nach ihren Flankenlinienhüllschnitten verkoppelt werden, welche entlang der Arbeitslinie verlaufen.

9. Verfahren nach Anspruch 7, dadurch gekennzeichnet, dass die vorbestimmbare Arbeitslinie aus Abschitten zusammengefügt wird, welche wenigstens annähernd Erzeugende der Zahnflankenfläche sind.

10. Verfahren nach Anspruch 7, dadurch gekennzeichnet, dass die vorbestimmbare Arbeitslinie aus Abschnitten zusammengefügt wird, bei welchen ein erster Ast wenigstens annähernd eine Erzeugende und ein zweiter Ast wenigstens annähernd eine einer Profillinie entsprechende Linie ist.

11. Verfahren nach Anspruch 8, dadurch gekennzeichnet, dass die vorbestimmbare Arbeitslinie aus Abschnitten zusammengefügt wird, welche wenigstens annähernd Flankenlinien der Zahnflankenfläche sind.

12. Verfahren nach Anspruch 8, dadurch gekennzeichnet, dass die vorbestimmbare Arbeitslinie aus Abschnitten zusammengefügt wird, bei welchen ein erster Ast wenigstens annähernd eine Flankenlinie und ein zweiter Ast wenigstens annähernd eine einer Profillinie entsprechende Linie ist.

13. Verfahren nach einem der Ansprüche 9 bis 12, dadurch gekennzeichnet, dass die zusätzliche Vorschubbewegung (O) tangential zur Zahnflanke vorgenommen wird.

14. Verfahren nach Anspruch 13, dadurch gekennzeichnet, dass die zusätzliche Vorschubbewegung (O) tangential an einem Zahnflankenmeridian vorgenommen wird.

15. Verfahren nach Anspruch 6, dadurch gekennzeichnet, dass die Steuerung der Arbeitspunktbewegung relativ zur Werkzeugfläche in Abhängigkeit von Verschleissmessungen an dieser Werkzeugfläche vorgenommen wird.

16. Verfahren nach Anspruch 6, dadurch gekennzeichnet, dass die Steuerung der Arbeitspunktbewegung (X) zur Erzielung einer besseren Werkzeugnutzung in Abhängigkeit von Verschleissmessungen und von Erfahrungswerten vorgenommen wird.

17. Verfahren nach Anspruch 6, dadurch gekennzeichnet, dass die Arbeitspunktbewegung (X) den zusätzlichen Vorschubbewegungen (O; O1, O2) kontinuierlich oder diskontinuierlich überlagert wird.

18. Verfahren nach Anspruch 1, dadurch gekennzeichnet, dass die Zustellbewegung zur Erzeugung unkorrigierter Zahnflanken wenigstens einstufig ausgeführt wird.

19. Verfahren nach Anspruch 1, dadurch gekennzeichnet, dass auf der wahlweise bestimmbaren Arbeitslinie die Zustellbewe-

- A 4 -     0180747

gungen zur Erzeugnung normal oder topografisch korrigierter Zahnflanken wenigstens einstufig ausgeführt werden, wobei die Zustellbewegungen der höheren Stufen entsprechend den Korrekturwerten jedes Korrekturpunktes kontinuierlich ausgeführt werden.

20. Verfahren nach Anspruch 19, dadurch gekennzeichnet, dass die Zustellbewegungen vom Werkzeug oder vom Werkstück ausgeführt werden.

21. Verfahren nach Anspruch 20, dadurch gekennzeichnet, dass die Zustellbewegungen vom Werkstück und speziell nur rotativ ausgeführt werden.

22. Verfahren nach Anspruch 20, dadurch gekennzeichnet, dass die Zustellbewegungen vom Werkstück und speziell nur translativ ausgeführt werden.

23. Verfahren nach einem der Ansprüche 1 - 22, dadurch gekennzeichnet, dass alle Bewegungen nach vorherbestimmbaren Wertemengen oder Funktionen von Wertemengen gesteuert werden.

24. Verfahren nach einem der Ansprüche 1 - 22, dadurch gekennzeichnet, dass alle Bewegungen ausser an sich bekannte Wälzvorschubbewegungen nach vorherbestimmbaren Wertemengen oder Funktionen von Wertemengen gesteuert werden.

25. Verfahren nach Anspruch 2, dadurch gekennzeichnet, dass die Werte für den Wälzweg (w) des Werkstückzentrums (P) und der Schleifscheibenhub- oder -längsvorschub (h) relativ zu einem Bezugspunkt laufend gemessen werden und dass mit diesen Werten die zusätzliche Vorschubbewegung (O) so gesteuert wird, dass die Gleichung

$$ys = h.tg\gamma + (w.\sin \alpha\ t)/\cos\gamma$$

für den Abstand (ys) des Arbeitspunktes zwischen Werkzeug und Werkstück vom Bezugspunkt wenigstens annähernd erfüllt ist, wobei

$\gamma$.. Winkel zwischen Erzeugende und
Teillinie der Erzeugungs-Zahnflanke,
$\alpha t$.. Eingriffswinkel in der Stirnschnittebene gemessen, sind.

26. Vorrichtung zur Durchführung des Verfahrens nach Anspruch 1 mit einem Maschinenrahmen, einer auf diesem verschiebbar sitzenden Wälzschlittenanordnung mit einem Werkstückträger und Spannmitteln zur Halterung des Werkstückes und gegenüber diesem einer Mehrfachschlittenanordnung, zur Ausführung von Schnitt-, Zustell- und Vorschubbewegungen und Antriebsmitteln sowie Steuereinrichtungen für die Ausführung dieser Bewegungen, dadurch gekennzeichnet, dass Führungs- und Steuermittel zur Steuerung und Führung eines wählbaren Arbeitspunktes auf dem Werkzeug entlang einer vorbestimmbaren, im wesentlichen auf der Zahnflanke verlaufenden Arbeitslinie vorgesehen sind, wobei die Führungsmittel mit Positionsgebermitteln verbunden sind, welche Positionssignale an die Steuermittel zur Mitverwendung bei der Steuerung der Antriebsmittel abgeben.

27. Vorrichtung nach Anspruch 26, dadurch gekennzeichnet, dass als Führungsmittel wnigstens ein Schlitten vorgesehen ist, welcher wenigstens einen zusätzlichen Verstellfreiheitsgrad für die Bewegung der Werkzeuge ergibt.

28. Vorrichtung nach Anspruch 27, dadurch gekennzeichnet, dass als Führungsmittel ein Schlitten pro Werkzeug vorgesehen ist, so dass dieses mit seinem Arbeitspunkt tangential an die Zahnflanke und zusätzlich zu allen anderen Bewegungen verschiebbar ist.

29. Vorrichtung nach Anspruch 27, dadurch gekennzeichnet, dass als Führungsmittel wenigstens ein Schlitten für eine zur Werkstückaxe radiale Vorschubbewegung der Werkzeuge eingerichtet ist.

30. Vorrichtung nach Anspruch 27, dadurch gekennzeichnet, dass als Führungsmittel wenigstens ein Schlitten für eine zur Zahnflanke tangentiale Vorschubbewegung eingerichtet ist.

31. Vorrichtung nach Anspruch 26, dadurch gekennzeichnet, dass die Steuermittel zur Steuerung der Wälzvorschubbewegung an sich bekannte mechanische Steuermittel und die zur Steuerung aller anderen Bewegungen elektronische Schaltungsmittel sind.

32. Vorrichtung nach Anspruch 26, dadurch gekennzeichnet, dass die Steuermittel zur Steuerung aller Bewegungen elektronische Schaltungsmittel sind.

33. Vorrichtung nach Anspruch 31, dadurch gekennzeichnet, dass die elektronischen Schaltungsmittel einen Hauptrechner (2.3) aufweisen, der mit einer Hauptsteuereinrichtung (2.4) zum Signalaustausch verbunden ist, an welche, ebenfalls zum Signalaustausch eine Schleifscheibensteuereinrichtung (2.5) zur Steuerung wenigstens eines Schleifscheibenantriebs (3.1), eine Eingriffs-, Zahnschrägewinkel- und Zwischenschlittensteuerung (2.6) zur Steuerung jedes Antriebs für die Eingriffs- sowie Zahnschrägewinkelverstellung und wenigstens eines Zwischenschlittens (3.2 bzw.3.3), eine Steuereinrichtung (2.7) zur Steuerung wenigstens eines Antriebes für wenigstens eine zusätzliche Vorschubbewegung, eine Steuereinrichtung (2.8) für die Steuerung wenigstens eines Antriebs für normale und/oder topografische Korrekturzustellbewegungen und eine Steuereinrichtung (2.9) für die Betätigung einer Schleifscheibenmesseinrichtung angeschlos sen ist, welche an die Steuereinrichtung der Schleifscheibenpositionen angeschlossen ist.

34. Vorrichtung nach Anspruch 26, dadurch gekennzeichnet,
dass das Werkzeug (1.5) eine an sich bekannte Tellerschleifscheibe oder Kegelschleifscheibe ist.

35. Vorrichtung nach Anspruch 26, dadurch gekennzeichnet,
dass das Werkzeug (1.5) eine Tellerschleifscheibe ist, deren
Arbeitsfläche eine Kegelstumpffläche mit einem Kegelwinkel
von etwas weniger als 180 Grad ist.

# Fig. 1

0180747

# Fig. 2

Fig. 3

## Fig. 4

## Fig. 5

Fig. 6

Fig. 7

Fig.8

Fig. 9

8/14

0180747

Fig. 10 a

Fig. 10 b

Fig. 10 c

Fig. 11

Fig. 12

Tellerscheibe

**Fig. 13**

Fig. 14

Fig. 15 a

1.3

1.0

0°

1.11

1.5

B

1.1

Fig. 15 b

1.3

B

1.5

1.10

Fig. 16